# EUROPÄISCHE PATENTANMELDUNG

(11) **EP 4 737 145 A1**
(43) Veröffentlichungstag der Anmeldung: **06.05.2026**
(21) Anmeldenummer: 25212943.2
(22) Anmeldetag: 03.11.2025
(51) Int. Cl.: B60H 1/00

(54) **OMNIBUS**

(30) Priorität: 05.11.2024 DE 102024132121
(71) Anmelder: Daimler Truck AG, 70771 Leinfelden-Echterdingen (DE)
(72) Erfinder: Herkommer, Dominik, Leinfelden-Echterdingen (DE); Haeringer, Marcel, Leinfelden-Echterdingen (DE)

(57) **Zusammenfassung**

Die Erfindung betrifft einen Omnibus (1) mit einem Innenraum und einer Klimatisierungseinrichtung, wobei der Innenraum des Omnibusses (1) in mehrere in Längsrichtung (L) des Omnibusses (1) zumindest teilweise abgeschlossene Raumbereiche (2.1 bis 2.8) oder Klimazonen (2.1 bis 2.8) unterteilt ist, wobei die Klimatisierungseinrichtung mindestens zwei Klimageräte aufweist, durch die die Klimazonen (2.1 bis 2.8) energetisch unterschiedlich beaufschlagbar sind, wobei eine Visualisierung zur Unterscheidung der Klimazonen (2.1 bis 2.8) angeordnet ist.

## Beschreibung

Die Erfindung betrifft einen Omnibus gemäß dem Oberbegriff des Anspruchs 1.

Bei Stadtbussen übersteigt der Verbrauch durch die Klimatisierung des Busses bei extremen Wetterbedingungen den Verbrauch durch die Fortbewegung. Zudem fahren Busse oft nur mit einem Bruchteil ihrer Kapazität, werden aber als Ganzes klimatisiert. Durch bedarfsgerechte Klimatisierung des Busses kann daher ein enormes Einsparpotential erschlossen werden.

DE 196 25 925 A1 beschreibt einen Omnibus mit mehreren Klimatisierungseinheiten zur lokalen Erzeugung und Einspeisung einer aus Frischluft und/oder Umluft zusammengesetzten über wenigstens einen Wärmetauscher kühl- oder heizbaren Zuluft in einen Luftkanal, der über wenigstens eine Auslassöffnung mit dem Innenraum des Omnibusses verbunden ist. Dabei wird die Klimatisierung in einzelnen Klimazonen dadurch verbessert, dass zumindest einem Teil dieser Klimatisierungseinheiten eine mit einer Außenwand des Omnibusses in Verbindung stehende Abluftöffnung zugeordnet ist, über die mittels eines steuerbaren Sperrorgans zumindest ein Teil der dem Innenraum entnommenen Umluft über eine Außenwand des Omnibusses ins Freie abführbar ist.

DE 10 2015 004 308 A1 beschreibt ein Verfahren zum Betreiben einer Omnibus-Klimaanlage, wobei ein Fahrgastraum des Omnibusses wenigstens eine Klimazone mit wenigstens einer Klimaeinstelleinrichtung aufweist, wobei in der Klimazone wenigstens ein Fahrgastplatz, insbesondere ein Sitzplatz und/oder ein Stehplatz, angeordnet ist. Dabei ist wenigstens eine Regel- und/oder Steuereinrichtung vorgesehen, mittels der die wenigstens eine Klimaeinstelleinrichtung in Abhängigkeit davon, ob der wenigstens eine Fahrgastplatz belegt ist oder nicht, selbsttätig gesteuert und/oder geregelt wird.

Der Erfindung liegt die Aufgabe zu Grunde, einen neuartigen Omnibus anzugeben.

Die Aufgabe wird erfindungsgemäß gelöst durch einen Omnibus mit den Merkmalen des Anspruchs 1.

Vorteilhafte Ausgestaltungen der Erfindung sind Gegenstand der Unteransprüche.

Es wird ein Omnibus mit einem Innenraum und einer Klimatisierungseinrichtung vorgeschlagen. Um den Omnibus möglichst bedarfsgerecht zu klimatisieren, wird erfindungsgemäß vorgeschlagen, dass der Innenraum des Omnibusses in mehrere in Längsrichtung des Omnibusses zumindest teilweise abgeschlossene Raumbereiche oder Klimazonen unterteilt ist, wobei die Klimatisierungseinrichtung mindestens zwei Klimageräte aufweist, durch die die Klimazonen energetisch unterschiedlich beaufschlagbar sind, wobei eine Visualisierung zur Unterscheidung der Klimazonen angeordnet ist.

Gemäß der vorliegenden Erfindung ist der Bus in mehrere Temperaturbereiche aufgeteilt. Diese Temperaturbereiche sind so gewählt, dass natürliche Einflussfaktoren auf das Raumklima begünstigend wirken. Das bedeutet zum Beispiel, dass in der Nähe von Türen, wo der Luftaustausch naturgemäß größer ist, oder im Bereich eines Faltenbalges eines Gelenkbusses, wo die Isolation schlechter ist, ein niedrigeres Komfort-Niveau herrscht. Andererseits kann oberhalb von im Boden platzierten Batterien von einer höheren Temperatur ausgegangen werden. Die Bereiche werden durch harmonisierten Luftstrom und Glastrennwände getrennt. Ferner können die Bereiche durch ein Farbschema gekennzeichnet werden. Dieses Farbschema kann beispielsweise dynamisch in Form von LED-Streifen umgesetzt sein, wodurch es möglich wird, das Komfort Niveau in den einzelnen Zonen nach zu erwartender Passagierzahl zu variieren und zu kennzeichnen. Dabei bieten sich beispielsweise zwei Farbschemata an. In einem temperaturabhängigen Farbschema steht beispielsweise rot für warm und blau für kalt mit Zwischenstufen. **In** einem komfortabhängig Farbschema steht beispielsweise grün für hohen Komfort, lila für geringen Komfort und gelb für mittleren Komfort. Die Anzahl der Bereiche verschiedenen Komforts kann nach Bedarf geregelt werden.

Der Verbrauch des Stadtbusses kann durch die erfindungsgemäße Lösung im Sommer und im Winter bei weiterhin gleichem Komfort-Niveau für weite Bereiche des Busses deutlich reduziert werden. Ferner wird den Bedürfnissen verschiedener Fahrgäste Rechnung getragen, die sich unterschiedliche Temperaturen wünschen. Der Farbcode dient als Erkennungsmerkmal.

Ausführungsbeispiele der Erfindung werden im Folgenden anhand von Zeichnungen näher erläutert.

Dabei zeigen:
- Fig. 1:: schematische Ansichten eines Omnibusses mit mehreren zumindest teilweise abgeschlossenen Raumbereichen oder Klimazonen,
- Fig. 2:: schematische Ansichten eines als Gelenkbus ausgebildeten Omnibusses mit mehreren zumindest teilweise abgeschlossenen Raumbereichen oder Klimazonen, und
- Fig. 3:: eine schematische Ansicht mehrerer Klimazonen, die durch Trennwände voneinander abgegrenzt sind.

Einander entsprechende Teile sind in allen Figuren mit den gleichen Bezugszeichen versehen.

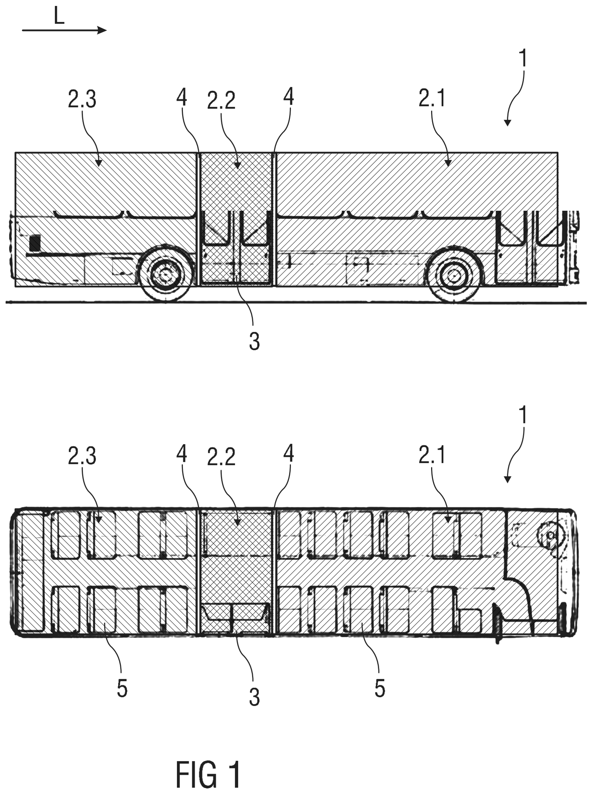

Figur 1 zeigt schematische Ansichten eines Omnibusses 1. Um den Omnibus 1 möglichst bedarfsgerecht zu klimatisieren, wird erfindungsgemäß vorgeschlagen, dass der Innenraum des Omnibusses 1 in mehrere in Längsrichtung L des Omnibusses 1 zumindest teilweise abgeschlossene Raumbereiche 2.1, 2.2, 2.3 oder Klimazonen 2.1, 2.2, 2.3 unterteilt ist, die mittels zumindest zweier Klimageräte (nicht gezeigt) energetisch unterschiedlich beaufschlagt werden, wobei die dabei ausgebildeten Klimazonen 2.1, 2.2, 2.3 visualisiert werden.

In einer Ausführungsform weist der Omnibus 1 in mindestens einem Einstiegsbereich 3 ein Display (nicht gezeigt) auf, das den Omnibus 1 skizzenhaft mit den unterschiedlichen Klimazonen 2.1, 2.2, 2.3 abbildet.

In einer Ausführungsform werden die unterschiedlichen Klimazonen 2.1, 2.2, 2.3 mit unterschiedlichen Farben markiert. In einem temperaturabhängigen Farbschema steht beispielsweise rot für warm und blau für kalt mit Zwischenstufen. In einem komfortabhängigen Farbschema steht beispielsweise grün für hohen Komfort, lila für geringen Komfort und gelb für mittleren Komfort. Beispielsweise kann die Klimazone 2.1 grün, die Klimazone 2.2 lila und die Klimazone 2.3 gelb markiert sein.

In einer Ausführungsform werden bei statisch eingerichteten Klimazonen 2.1, 2.2, 2.3 die Wände und/oder der Boden und/oder die Decke der Klimazonen 2.1, 2.2, 2.3 entsprechend mit voneinander verschiedenen Farben, insbesondere durch Lichtstreifen gekennzeichnet.

In einer Ausführungsform erfolgt die Einrichtung der Klimazonen 2.1, 2.2, 2.3 dynamisch nach der jeweiligen Anforderung.

In einer Ausführungsform werden Bereiche des Omnibusses1, die Langstreckenpassagieren zugeordnet sind, mit einem höheren Komfort klimatisiert als solche, die Kurzstreckenpassagieren zugeordnet sind.

In einer Ausführungsform wird der Komfort durch eine Anpassung an vorgegebene Sollwerte der Temperatur und/oder der Luftfeuchtigkeit und/oder der Frischluftbeimischung der jeweiligen Klimazonen 2.1, 2.2, 2.3 eingestellt.

In einer Ausführungsform wird die Unterteilung der Klimazonen 2.1, 2.2, 2.3 durch Trennwände 4, insbesondere aus Glas, gebildet. Die Trennwände 4 können dabei so ausgebildet sein, dass die Klimazonen 2.1 bis 2.3 nur teilweise voneinander getrennt sind, sodass ein Durchgang 8 freibleibt.

In einer Ausführungsform erfolgt die Brauchluftabführung nebeneinanderliegender Klimazonen 2.1, 2.2, 2.3 aus dem Omnibus 1 in deren Übergangsbereich nach dem Gleichstromprinzip.

In einer Ausführungsform erfolgt die Frischluftzuführung nebeneinanderliegender Klimazonen 2.1, 2.2, 2.3 in den Omnibus 1 in deren Übergangsbereich nach dem Gleichstromprinzip.

In einer Ausführungsform erfolgt die Luftführung LF vertikal und/oder horizontal.

In einer Ausführungsform werden die Klimazonen 2.1, 2.2, 2.3 mittels mindestens einer Kamera (nicht gezeigt) überwacht, eine Personenzahl der Passagiere ermittelt und entsprechend der Personenzahl der Komfort der Klimatisierung geregelt, wobei bei höherer Personenzahl ein höherer Komfort eingestellt wird als bei niedriger Personenzahl.

In einer Ausführungsform wird die Belegung von Sitzplätzen 5 in den Klimazonen 2.1, 2.2, 2.3 sensorisch überwacht und anhand der Belegungshöhe der Komfort der Klimatisierung geregelt, wobei bei höherer Belegung ein höherer Komfort eingestellt wird als bei niedriger Belegung.

In einer Ausführungsform wird in einem leeren Raumbereich 2.1, 2.2, 2.3 die Klimatisierung abgeschaltet.

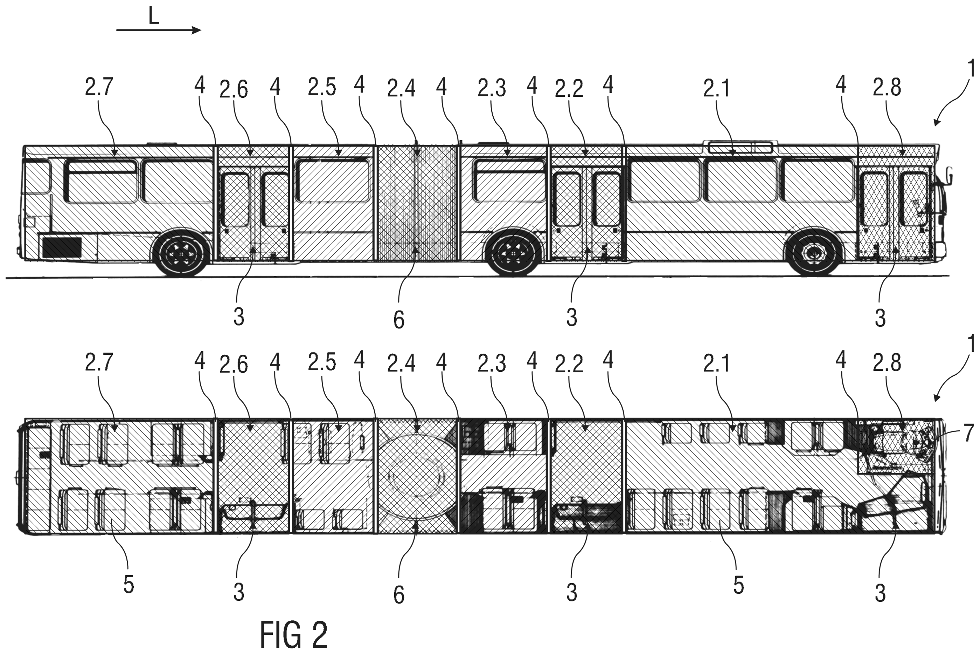

Figur 2 zeigt schematische Ansichten eines als Gelenkbus ausgebildeten Omnibusses 1, der einen Faltenbalg 6 aufweist. Beispielhaft sind hier mehr Raumbereiche 2.1 bis 2.8 dargestellt.

Beispielsweise können die Klimazonen 2.1 und 2.7 grün, die Klimazonen 2.2, 2.4 und 2.6 lila und die Klimazonen 2.3 und 2.5 gelb markiert sein. Eine weitere Klimazone 2.8 kann im Bereich eines Fahrersitzes 7 vorgesehen sein. Die beschriebenen Zonen-Komfort-Niveaus sind beispielhaft für ein mittleres Passagier-Aufkommen beschrieben. Bei hohem Passagier-Aufkommen können mehr Zonen mit hohem Komfort eingestellt werden.

Klimazone 2.7: Im Heck des Omnibusses 1 sind viele Sitzplätze 5 sowie der Antrieb und viele Akkus untergebracht. Durch die Entfernung zu den Türen fahren hier Gäste lange Strecken. Daher eignet sich das Heck für eine Zone mit hohem Komfort.

Klimazonen 2.2 und 2.6: Die Türbereiche haben ohnehin einen niedrigeren Komfort, da der Luftaustausch hier am größten ist. Dementsprechend kann hier eine niedrigere Temperatur geplant werden.

Klimazonen 2.3 und 2.5: Viele Gäste, die kurze Fahrten machen, sitzen in der Nähe der Tür. Dementsprechend sind diese wenig geneigt, ihre Kleidung an eine wärmere Umgebung im Bus anzupassen und mit einem geringeren Komfort-Niveau einverstanden.

Klimazone 2.4: Der Faltenbalg 6 bedeutet eine schlechte Isolation und bietet durch die Bewegung oft keine guten Sitzgelegenheiten. Dementsprechend ist dieser Platz oft die letzte Wahl der Passagiere. Hier kann mit geringem Klimakomfort gefahren werden.

Klimazone 2.1 ist beispielsweise eine Komfort-Zone im vorderen Bereich des Omnibusses 1.

Die Klimazone 2.8 ist der Fahrerarbeitsplatz. Hier wird gegebenenfalls noch ein höherer Komfort benötigt, da der Fahrer länger im Omnibus 1 sitzt als die Passagiere.

In einer Ausführungsform kann bei einem Reisebus oder einem Gelenkbus mindestens ein Raumbereich 2.1 bis 2.8 in der Nähe des mindestens einen Einstiegsbereichs 3, das heißt in der Nähe von Türen, wo der Luftaustausch naturgemäß größer ist, oder im Bereich des Faltenbalges 6 des Gelenkbusses, wo die Isolation schlechter ist, ein niedrigeres Komfort-Niveau und/oder eine niedrigere Temperatur (insbesondere im Winter) oder eine höhere Temperatur (insbesondere im Sommer) vorgesehen sein. Andererseits kann oberhalb von im Boden des Omnibusses 1 platzierten Batterien ein Raumbereich 2.1, 2.2, 2.3 mit einer höheren Temperatur vorgesehen sein.

Insbesondere bei einem als Reisebus ausgebildeten Omnibus 1 kann eine Sitzheizung der Sitzplätze 5 individuell für eine jeweilige Komfortzone verwendet werden. Dabei kann eine Rückkopplung von der Sitzheizung zu einer allgemeinen Heizung vorgesehen sein.

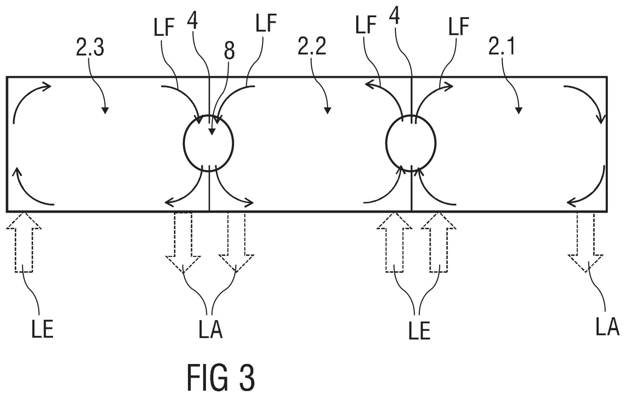

Figur 3 ist eine schematische Ansicht mehrerer Klimazonen 2.1 bis 2.3, die durch Trennwände 4 voneinander abgegrenzt sind. Die Trennwände 4 können dabei so ausgebildet sein, dass die Klimazonen 2.1 bis 2.3 nur teilweise voneinander getrennt sind, sodass jeweils ein Durchgang 8 freibleibt. Im Bereich des Durchgangs 8 kann eine Luftführung LF der einander benachbarten Klimazonen 2.1 bis 2.3 parallelisiert sein, insbesondere in einer Vertikalrichtung und/oder in einer Horizontalrichtung. Auf diese Weisung wird eine nur geringe Vermischung der Luft der benachbarten Klimazonen 2.1 bis 2.3 erreicht. Insbesondere können Lufteinlässe LE und Luftauslässe LA im Bereich der Trennwände 4 vorgesehen sein.

### Bezugszeichenliste

- 1: Omnibus
- 2.1 bis 2.8: Raumbereich, Klimazone
- 3: Einstiegsbereich
- 4: Trennwand
- 5: Sitzplatz
- 6: Faltenbalg
- 7: Fahrersitz
- 8: Durchgang
- L: Längsrichtung
- LA: Luftauslass
- LE: Lufteinlass
- LF: Luftführung

## Patentansprüche

1. Omnibus (1) mit einem Innenraum und einer Klimatisierungseinrichtung,
**dadurch gekennzeichnet, dass** der Innenraum des Omnibusses (1) in mehrere in Längsrichtung (L) des Omnibusses (1) zumindest teilweise abgeschlossene Raumbereiche (2.1 bis 2.8) oder Klimazonen (2.1 bis 2.8) unterteilt ist, wobei die Klimatisierungseinrichtung mindestens zwei Klimageräte aufweist, durch die die Klimazonen (2.1 bis 2.8) energetisch unterschiedlich beaufschlagbar sind, wobei eine Visualisierung zur Unterscheidung der Klimazonen (2.1 bis 2.8) angeordnet ist.

2. Omnibus (1) nach Anspruch 1,
**dadurch gekennzeichnet, dass** die Visualisierung mindestens ein in mindestens einem Einstiegsbereich (3) angeordnetes Display aufweist, das den Omnibus (1) skizzenhaft mit den unterschiedlichen Klimazonen (2.1 bis 2.8) abbildet.

3. Omnibus (1) nach Anspruch 1 oder 2,
**dadurch gekennzeichnet, dass** die unterschiedlichen Klimazonen (2.1 bis 2.8) mit unterschiedlichen Farben markiert sind.

4. Omnibus (1) nach einem der vorhergehenden Ansprüche,
**dadurch gekennzeichnet, dass** die Klimazonen (2.1 bis 2.8) statisch eingerichtet sind, wobei die Wände und/oder der Boden und/oder die Decke der Klimazonen (2.1 bis 2.8) mit voneinander verschiedenen Farben, insbesondere durch Lichtstreifen, gekennzeichnet sind, oder dass die Klimazonen (2.1 bis 2.8) dynamisch einrichtbar sind.

5. Omnibus (1) nach einem der vorhergehenden Ansprüche,
**dadurch gekennzeichnet, dass** ein Komfort der Klimazonen (2.1 bis 2.8) durch eine Anpassung an vorgegebene Sollwerte der Temperatur und/oder der Luftfeuchtigkeit und/oder der Frischluftbeimischung der jeweiligen Klimazonen (2.1 bis 2.8) einstellbar ist.

6. Omnibus (1) nach einem der vorhergehenden Ansprüche,
**dadurch gekennzeichnet, dass** die Klimazonen (2.1 bis 2.8) durch Trennwände (4) voneinander getrennt sind, wobei die Trennwände (4) insbesondere einen Durchgang (8) von einer zur anderen Klimazone (2.1 bis 2.8) aufweisen.

7. Omnibus (1) nach einem der vorhergehenden Ansprüche,
**dadurch gekennzeichnet, dass** eine Brauchluftabführung nebeneinanderliegender Klimazonen (2.1 bis 2.8) aus dem Omnibus (1) und/oder eine Frischluftzuführung nebeneinanderliegender Klimazonen (2.1 bis 2.8) in den Omnibus (1) in deren Übergangsbereich nach dem Gleichstromprinzip erfolgt.

8. Omnibus (1) nach einem der vorhergehenden Ansprüche,
**dadurch gekennzeichnet, dass** mindestens eine Kamera zur Überwachung der Klimazonen (2.1 bis 2.8) und zur Ermittlung einer Personenzahl der Passagiere angeordnet ist, wobei der Komfort der Klimatisierung so regelbar ist, dass bei höherer Personenzahl ein höherer Komfort eingestellt wird als bei niedriger Personenzahl.

9. Omnibus (1) nach einem der vorhergehenden Ansprüche,
**dadurch gekennzeichnet, dass** Sensoren zur Überwachung der Belegung von Sitzplätzen (5) in den Klimazonen (2.1 bis 2.8) angeordnet sind, wobei der Komfort der Klimatisierung so regelbar ist, dass bei höherer Belegung ein höherer Komfort eingestellt wird als bei niedriger Belegung.

10. Omnibus (1) nach einem der vorhergehenden Ansprüche,
**dadurch gekennzeichnet, dass** die Klimatisierung so regelbar ist, dass die Klimatisierung in einem leeren Raumbereich (2.1 bis 2.8) abgeschaltet wird.
